Europäisches Patentamt

European Patent Office

Office européen des brevets

(11) Veröffentlichungsnummer: **0 316 604**
**A1**

# (12) EUROPÄISCHE PATENTANMELDUNG

(21) Anmeldenummer: 88117441.1

(51) Int. Cl.4: **B29B 7/76**

(22) Anmeldetag: 19.10.88

(30) Priorität: 27.10.87 DE 3736299

(43) Veröffentlichungstag der Anmeldung:
24.05.89 Patentblatt 89/21

(84) Benannte Vertragsstaaten:
**AT DE FR GB IT**

(71) Anmelder: **ELASTOGRAN POLYURETHANE GMBH**
**Landwehrweg**
**D-2844 Lemförde(DE)**

(72) Erfinder: **Wallner, Josef**
**Brauneckstrasse 2**
**D-8150 Holzkirchen(DE)**
Erfinder: **Schlueter, Klaus**
**Windeckstrasse 1c**
**D-8000 Muenchen 70(DE)**
Erfinder: **Taubenmann, Peter**
**Strindbergstrasse 1**
**D-8000 Muenchen 60(DE)**
Erfinder: **Reisinger, Gerhard**
**Zugspitzstrasse 5**
**D-8025 Unterhaching(DE)**
Erfinder: **Thiele, Heino, Dr.**
**An der Froschlache 23**
**D-6700 Ludwigshafen(DE)**
Erfinder: **Weber, Werner, Dr.**
**Ludwig-Uhland-Strasse 3**
**D-6520 Worms 1(DE)**
Erfinder: **Piesche, Manfred, Dr.**
**Bismarckstrasse 8**
**D-6520 Worms 22(DE)**
Erfinder: **Zettler, Hans Dieter**
**Bueckelhaube 23**
**D-6718 Gruenstadt(DE)**

(74) Vertreter: **Springer, Hans Jörg, Dr. et al**
**BASF Aktiengesellschaft Patentabteilung**
**Carl-Bosch-Strasse 38**
**D-6700 Ludwigshafen(DE)**

(54) **Hochdruckmischvorrichtung zum Mischen von Mehrkomponentenkunststoffen, insbesondere Polyurethan.**

(57) Die Hochdruckmischvorrichtung besteht aus einer Eintrittsöffnungen (4, 5) für die Komponenten aufweisenden Mischkammer (1) und einem unmittelbar anschließenden, winklig dazu verlaufenden Ausströmkanal (10). Mischkammer und Ausströmkanal haben jeweils einen durchgehend gleichen Querschnitt mit jeweils querschnittsgleichen, hin- und herbewegbaren Kolben (2, 11). Zwecks Erzielung eines beruhigten Gemischaustritts aus der Vorrichtung sowie einer guten Gemischqualität ist aus der der Mischkammer gegenüberliegenden Wand des Ausströmkanals ein Stift (14) in Richtung auf die Mischkammer und ggf. in diese hinein bewegbar. Im Verhältnis zur Mischkammerachse kann der Stift koaxial
oder exzentrisch angeordnet sein.

## FIG. 1

## Hochdruckmischvorrichtung zum Mischen von Mehrkomponentenkunststoffen, insbesondere Polyurethan

Die Erfindung betrifft eine Hochdruckmischvorrichtung nach dem Oberbegriff des Anspruchs 1.

Eine derartige Hochdruckmischvorrichtung ist aus der DE-PS 29 07 938 bekannt. Dabei ist die Mischkammer sehr klein ausgeführt, so daß die hier aufeinandertreffenden Komponenten noch mit starker Turbulenz in den Ausströmkanal eintreten. Die Mischkammer ist so klein gewählt, um für eine möglichst günstige Mischung zu sorgen. Der Austritt des Gemisches aus dem Ausströmkanal erfolgt verhältnismäßig unruhig.

Aus der DE-PS 30 40 922 ist ebenfalls eine Hochdruckmischvorrichtung der eingangs genannten Art bekannt. Bei dieser bekannten Hochdruckmischvorrichtung kann der Kolben des Ausströmkanals zum Androsseln des Übergangs zwischen Mischkammer und Ausströmkanal verwendet werden, um auf diese Weise für eine Beruhigung der Strömung zu sorgen.

Schließlich ist es aus der DE-OS 24 13 337 bekannt, bei einers anders ausgestalteten Hochdruckmischvorrichtung - die keinen Ausströmkanal aufweist - aus dem Formwerkzeug einen Verdrängerkolben in die Mischkammer einzuführen, um beruhigend auf die Strömung einzuwirken und einen Lufteinschlag zu verhindern.

Der Erfindung liegt die Aufgabe zugrunde, eine Hochdruckmischvorrichtung der eingangs genannten Art, d.h. eine solche mit einem winklig zur Mischkammer angeordneten Ausströmkanal zu schaffen, bei der ein äußerst beruhigter Gemischaustritt aus dem Ausströmkanal bei gleichzeitiger Sicherstellung guter Mischung sowie der Verhinderung von Lufteinschlag und Vor- bzw. Nachlauf erfolgt.

Diese Aufgabe wird durch das Kennzeichen des Anspruchs 1 gelöst.

Dadurch, daß am Übergang zwischen Mischkammer und Ausströmkanal ein Stift in Richtung auf die Mischkammer und vorzugsweise mehr oder weniger in diese hinein bewegbar ist, wird die Mischkammer in diesem Bereich verkleinert. Es werden hierdurch Turbulenzen gedämpft, d.h. es tritt bereits eine Beruhigung der Strömung in diesem Bereich ein, die sich dann auch auf einen beruhigten Austritt aus dem Ausströmkanal auswirkt. Weiterhin wird ein Lufteinschlag verhindert, da nur ein sehr kleines Volumen zur Verfügung steht. Insbesondere werden Spritzer, die durch die sehr hohe Eintrittsgeschwindigkeit der Komponenten bedingt sind, aufgefangen, d.h. diese können nicht mehr oder weniger ungemischt in den Ausströmkanal gelangen. Im Verhältnis zum Querschnitt der Mischkammer kann der Querschnitt des Stiftes größer, gleich oder kleiner sein.

Vorteilhafte Ausgestaltungen der Erfindung sind Gegenstand der Ansprüche 2 bis 5. Insbesondere wenn die Hochdruckmischvorrichtung so ausgebildet ist wie in Anspruch 5 angegeben läßt sich die Gemischqualität weiter verbessern.

Im folgenden wird die Erfindung unter Hinweis auf die Zeichnung anhand eines Ausführungsbeispiels näher erläutert.

Es zeigt:

Fig. 1 einen Schnitt durch eine Ausführungsform einer erfindungsgemäßen Hochdruckmischvorrichtung in Betriebe- oder Mischstellung;

Fig. 2 einen der Fig. 1 entsprechenden Schnitt, jedoch in Ruhestellung;

Fig. 3 einen Schnitt durch die Fig. 2, jedoch um 90° gedreht;

Fig. 4 einen Schnitt durch die Fig. 1, jedoch um 90° gedreht;

Fig. 5 einen Schnitt gemäß der Linie A - B der Fig. 1 zur Darstellung einer besonderen Anordnung des Stifes;

Fig. 6 einen der Fig. 5 entsprechenden Schnitt mit einem etwas anders angeordneten Stift; und

Fig. 7 einen den Fig. 5 und 6 entsprechenden Schnitt, jedoch mit einer weiteren Anordnung des Stiftes.

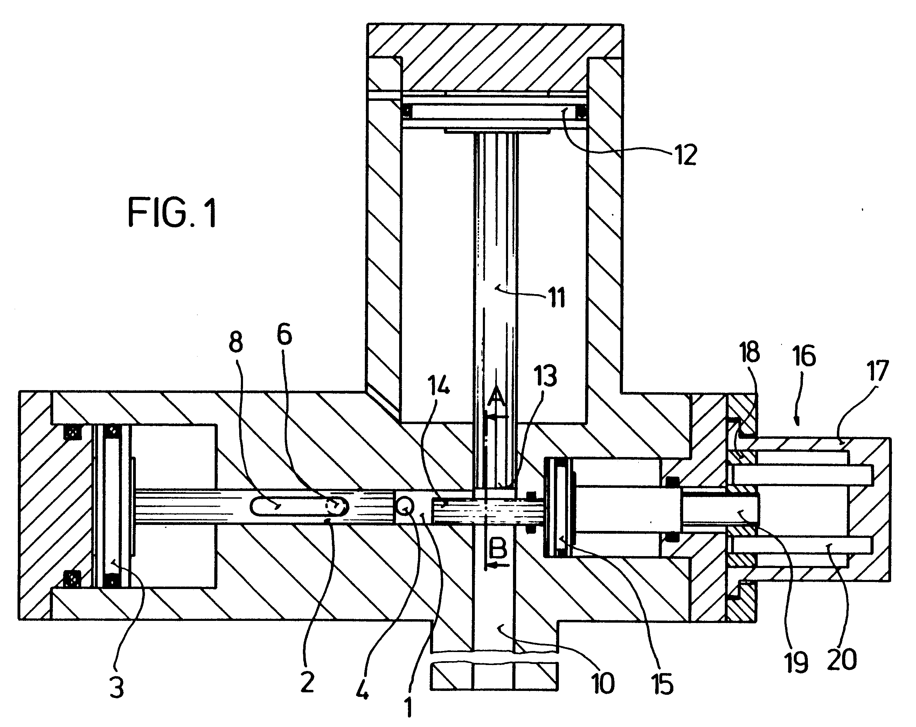

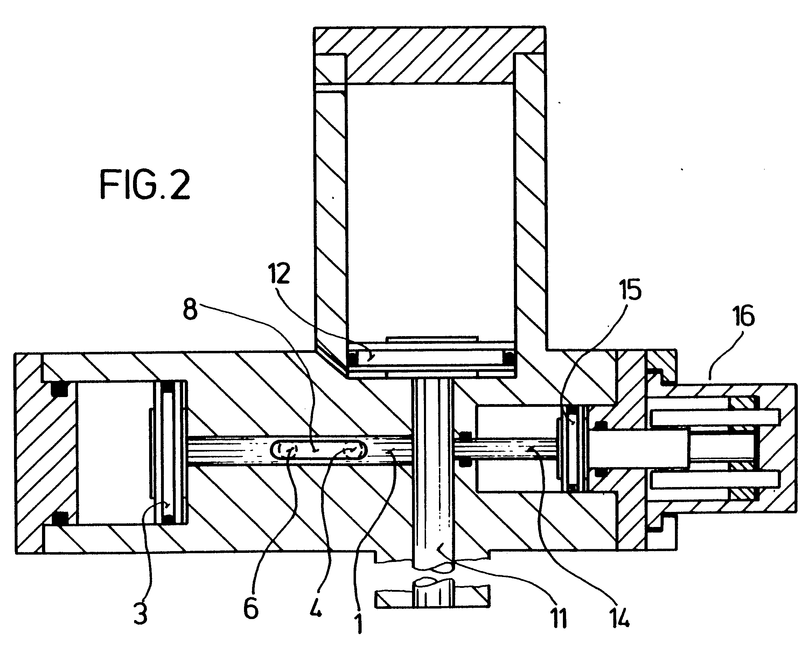

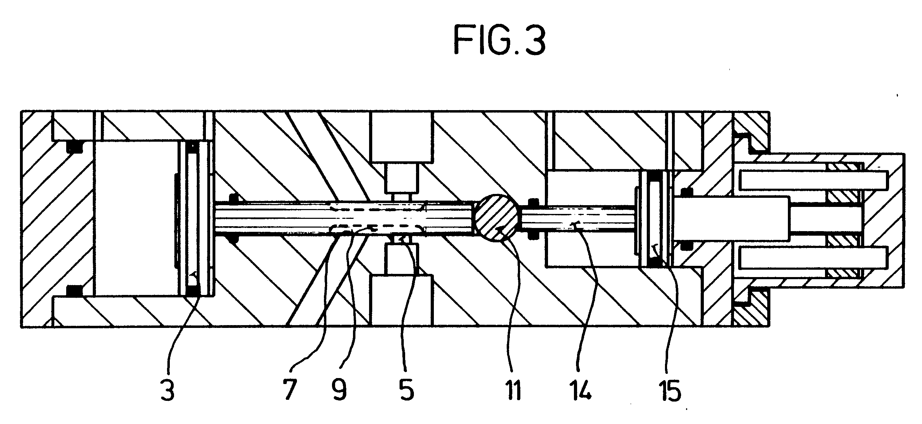

Die in den Zeichnungen dargestellte Hochdruckmischvorrichtung besteht aus einem Gehäuse, in dem eine Mischkammer 1 ausgebildet ist. In der Mischkammer 1 ist ein querschnittsgleicher Mischkammerkolben 2 hin- und herbewegbar. In die Mischkammer 1 führen Eintrittsöffnungen 4 und 5. Aus der Mischkammer heraus führen Rücklaufleitungen 6 und 7. Der Mischkammerkolben 2 ist aus der in Fig. 1 dargestellten Mischstellung, in der er die Eintrittsöffnungen 4 und 5 freigibt, bis in die in Fig. 2 gezeigte Stellung bewegbar, in der er die gesamte Mischkammer 1 ausfüllt. In dieser in Fig. 2 gezeigten Ruhestellung rezirkulieren die Komponenten von denEintrittsöffnungen zu den zugehörigen Rücklaufleitungen über Rücklauf nuten 8 und 9. Die Eintrittsöffnung 4 ist über eine Rücklaufnut 8 mit der Rücklaufleitung 6 verbunden. Die Eintrittsöffnung 5 ist über eine Rücklaufnut 9 mit der Rücklaufleitung 7 verbunden (Fig. 3). Der Mischkammerkolben 2 wird mit Hilfe eines Hydraulikkolbens 3 bewegt.

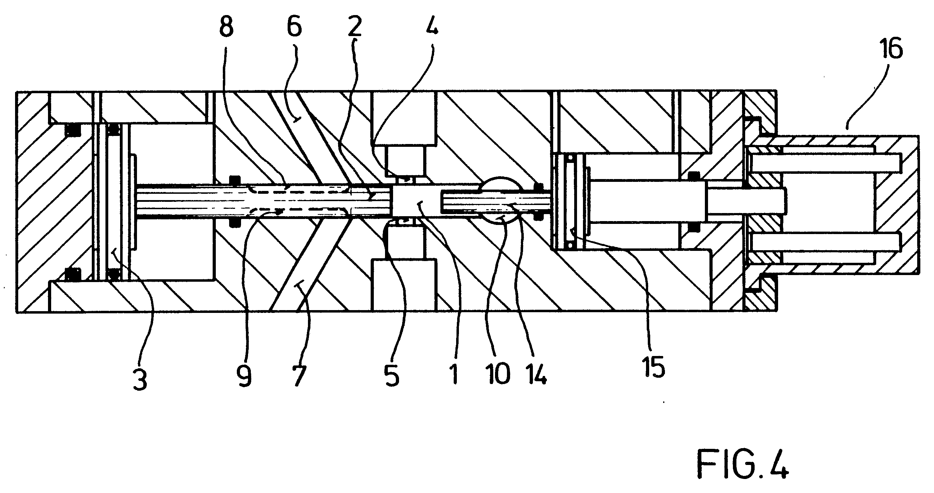

Rechtwinklig an die Mischkammer 1 schließt ein Ausströmkanal 10 an, in dem ein Kolben 11 hin- und herbewegbar ist, der durch einen hydraulischen Kolben 12 bewegt wird. Der Kolben 11 nimmt in der Betriebs-oder Mischstellung die in Fig. 1 bzw. 4 gezeigte Stellung ein.

In Mischstellung der Kolben 2 und 11 ist aus der der Mischkammer gegenüberliegenden Wand des Ausströmkanals ein Stift 14 mehr oder weniger weit in die Mischkammer 1 einführbar. Der Stift 14 wird durch einen hydraulischen Kolben 15 bewegt. Das Maß, mit dem der Stift 14 in die Mischkammer 1 einführbar ist, ist durch eine Verstelleinrichtung 16 einstellbar. Diese Verstelleinrichtung 16 besteht aus einem drehbar gelagerten Deckel 17 sowie einer Verstellmutter 18, die auf einem fest mit dem Hydraulikkolben und dem Stift 14 verbundenen Gewindebolzen 19 aufgeschraubt ist. Führungsstifte sind mit 20 bezeichnet. Wenn an dem Deckel 17 gedreht wird, wird das Maß, mit dem der Stift 14 in die Mischkammer 1 einführbar ist, verstellt.

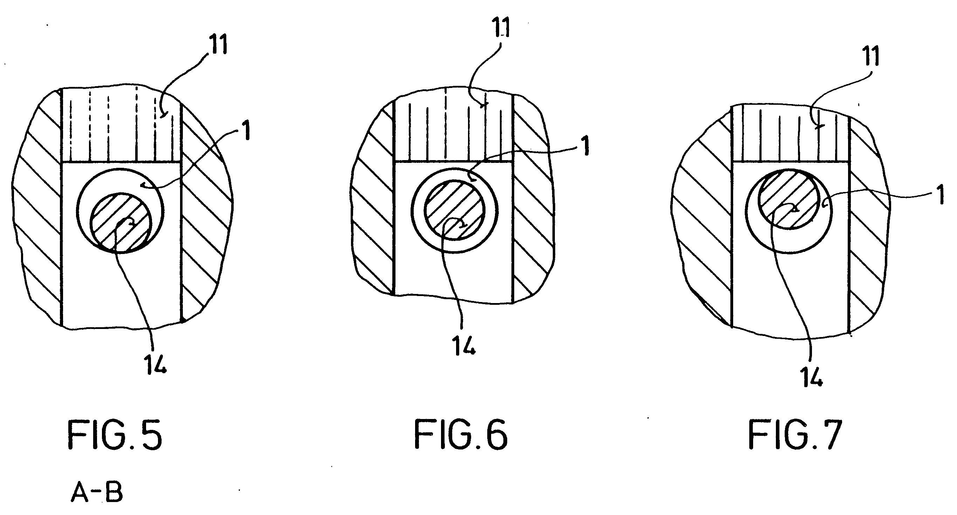

In Fig. 6 ist eine Ausführungsform dargestellt, bei der der Stift 14 zentrisch in der Mischkammer 1 liegt. In Fig. 5 ist eine exzentrische Anordnung dargestellt, ebenso wie in Fig. 7. Die Anordnungen der Fig. 5 und 7 unterscheiden sich dadurch, daß der Stift 14 einmal relativ weit unten in der Mischkammer und einmal relativ weit oben in der Mischkammer liegt.

Zur Durchführung eines Schusses wird erst einmal der Kolben 11 in die in Fig. 1 gezeigte Stellung bewegt, so daß der Ausströmkanal frei ist. Dann wird der Stift 14 gleichzeitig mit dem Zurückziehen des Mischkammerkolbens 2 in der gewünschten Weise und in dem gewünschten Maß in die Mischkammer 1 eingeführt, so daß der Stift 14 und der Mischkammerkolben 2 die in den Fig. 1 und 4 gezeigte Stellung einnehmen. Hierbei wird der Rücklauf unterbrochen und der Eintritt der Komponenten durch die Eintrittsöffnungen 4 und 5 in die Mischkammer 1 freigegeben. Der Stift wirkt beruhigend auf die Strömung des Gemisches aus der Mischkammer in den Ausströmkanal 10 ein, wodurch die Strömung insgesamt beruhigt wird und ein glatter, gleichförmiger Strahl aus dem Ausströmkanal austritt.

## Ansprüche

1. Hochdruckmischvorrichtung zum Mischen von Mehrkomponentenkunststoffen, insbesondere Polyurethan mit einer Eintrittsöffnungen (4, 5) für die Komponenten aufweisenden Mischkammer (1) und einem unmittelbar anschließenden, winklig dazu verlaufenden Ausströmkanal (10), wobei die Mischkammer und der Ausströmkanal jeweils einen durchgehend gleichen Querschnitt haben und mit einem jeweils querschnittgleichen Kolben (2, 11) versehen sind, von denen der Kolben (2) in der Mischkammer aus einer hinteren, die Komponenteneintrittsöffnungen freigebenden Stellung bis zur Einmündung der Mischkammer in den Ausströmkanal und der Kolben (11) in dem Ausströmkanal aus einer hinteren, die Einmündung freigebenden Stellung bis in eine den Ausströmkanal voll ausfüllende Stellung hin- und herbewegbar ist, dadurch gekennzeichnet, daß aus der der Mischkammer (1) gegenüberliegenden Wand des Ausströmkanals (10) ein Stift (14) in Richtung auf die Mischkammer und ggf. in diese hinein bewegbar ist, dessen Querschnitt geringer ist, als derjenige der Mischkammer, wobei die Achsen von Stift (14) und Mischkammerkolben (2) parallel zueinander verlaufen.

2. Hochdruckmischvorrichtung nach Anpruch 1, dadurch gekennzeichnet, daß der Stift (14) einen kreisförmigen Querschnitt hat.

3. Hochdruckmischvorrichtung nach den Ansprüchen 1 und 2, dadurch gekennzeichnet, daß die Achsen von Stift (14) und Mischkammerkolben (1) zusammenfallen, so daß der Stift konzentrisch zur Mischkammer liegt.

4. Hochdruckmischvorrichtung nach den Ansprüchen 1 und 2, dadurch gekenzeichnet, daß die Achsen von Stift (14) und Mischkammerkolben (1) gegeneinander versetzt sind, so daß der Stift exzentrisch in der Mischkammer liegt.

5. Hochdruckmischvorrichtung nach Anspruch 1, dadurch gekennzeichnet, daß der Stift (14) hochtourig rotierbar ist.

FIG. 1

EP 0 316 604 A1

FIG.2

EP 0 316 604 A1

FIG.3

FIG.4

EP 0 316 604 A1

FIG.7

FIG.6

FIG.5

A-B

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 313 042 (BAUER) <br> * Ansprüche 1,2; Figur * <br> --- | 1-3 | B 29 B 7/76 |
| A,D | GB-A-2 086 747 (ADMIRAL) <br> * Figur 4 * <br> --- | 4 | |
| A | DE-A-3 117 014 (KEUERLEBER) <br> * Zusammenfassung; Figuren * <br> ----- | 5 | |

**RECHERCHIERTE SACHGEBIETE (Int. Cl.4)**

B 29 B
B 29 D

Der vorliegende Recherchenbericht wurde für alle Patentansprüche erstellt

| Recherchenort | Abschlußdatum der Recherche | Prüfer |
|---|---|---|
| DEN HAAG | 08-03-1989 | PEETERS S. |